# EUROPÄISCHE PATENTSCHRIFT

(11) **EP 1 513 905 B1**
(45) Veröffentlichungstag und Bekanntmachung des Hinweises auf die Patenterteilung: **28.06.2006**
(21) Anmeldenummer: 03727453.7
(22) Anmeldetag: 08.05.2003
(51) Int. Cl.: C09J 7/02, C09J 11/08, C09J 153/02

(54) **HAFTKLEBEMASSE FÜR EIN- ODER BEIDSEITIG HAFTKLEBRIGE KLEBEFOLIENSTREIFEN UND VERFAHREN ZUR HERSTELLUNG HIERZU**
PRESSURE-SENSITIVE ADHESIVE MATERIAL FOR FILM STRIPS THAT ARE CONTACT ADHESIVE ON ONE OR BOTH SIDES, AND METHOD FOR THE PRODUCTION THEREOF
MATERIAU ADHESIF POUR BANDES DE FEUILLE DE COLLAGE ADHESIVES SUR UNE FACE OU SUR DEUX FACES ET PROCEDE POUR LE PRODUIRE

(30) Priorität: 05.06.2002 DE 10224842
(43) Veröffentlichungstag der Anmeldung: 16.03.2005
(73) Patentinhaber: tesa AG, 20253 Hamburg (DE)
(72) Erfinder: LÜHMANN, Bernd, 22844 Norderstedt (DE); SPIES, Manfred, 24576 Bad Bramstedt (DE); JUNGHANS, Andreas, 22457 Hamburg (DE); KRAWINKEL, Thorsten, 22457 Hamburg (DE); RING, Christian, 20259 Hamburg (DE); FRANCK, Kerstin, 22529 Hamburg (DE)
(86) Internationale Anmeldenummer: PCT/EP2003/004825
(87) Internationale Veröffentlichungsnummer: WO 2003/104346

(56) Entgegenhaltungen:
- EP-A- 0 528 191
- EP-A- 1 013 291
- WO-A-00/26293
- WO-A-99/11728
- WO-A-99/54422
- US-A- 4 367 732
- US-A- 5 492 943

## Beschreibung

Die Erfindung betrifft eine Haftklebemasse für ein- und beidseitig haftklebrige Klebefolienstreifen, welche sich durch dehnendes Verstrecken in der Verklebungsebene rückstands- und zerstörungsfrei wieder ablösen lassen bestehend aus einer Mischung mit einem Blockcopolymer und einem Klebrigmacher.

Ferner betrifft die Erfindung eine Verwendung der Haftklebemasse.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US-PS 4,024,312, DE 33 31 016 C2, WO 92/01132 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 854 A1, WO 99/37729 A1 und DE 100 03 318 A1 bekannt und werden nachfolgend auch als stripfähige Selbstklebebänder bezeichnet.

Eingesetzt werden solche stripfähigen Selbstklebebänder häufig in Form von ein- oder beidseitig haftklebrigen Klebefolienstreifen, die bevorzugt einen nicht haftklebrigen Anfaßbereich aufweisen, von welchem aus der Ablöseprozeß eingeleitet wird.

Besondere Anwendungen entsprechender Selbstklebebänder finden sich in der DE 42 33 872 A1, DE 195 11 288 A1, US 5,507,464 A, US 5,672,402 A und WO 94/21157 A1, spezielle Ausführungsformen sind zum Beispiel in der DE 44 28 587 A1, DE 44 31 914 A1, WO 97/07172 A1, DE 196 27 400 A1, WO 98/03601 A1 und DE 196 49 636 A1, DE 197 20 526 A1, DE 197 23 177 A1, DE 297 23 198 A1, DE 197 26 375 A1, DE 197 56 084 A1, DE 197 56 816 A1, DE 198 42 864 A1, DE 198 42 865 A1, WO 99/31193 A1, WO 99/37729 A1 und WO 99/63018 A1 beschrieben.

Einsatzgebiete vorgenannter stripfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Sie ersetzen hierbei klassische Befestigungsmittel, wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der Klebefolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, daß die Funktionsfähigkeit der Klebestreifen auf einer Vielzahl von Substraten gegeben sein muß, um als Universalfixierung im Wohn-, Arbeits- und Bürobereich dienen zu können.

Obwohl in der oben zitierten Patentliteratur eine breite Palette von Haftklebemassen für die Verwendung in stripfähigen Selbstklebebändern beschrieben werden, so weisen aktuell im Markt befindliche Handetsprodukte (zum Beispiel tesa® Powerstrips® der tesa AG, 3M Command® Adhesive Klebestreifen der Firma 3M sowie Plastofix® Formule Force 1000 Klebestreifen der Firma Plasto S.A.) sämilichst Haftklebemassen auf Basis von Styrolblockcopolymeren mit im Elastomerblock ungesättigten Polydienblöcken auf.

Typischerweise finden lineare oder radiale Blockcopolymere auf Basis von Polystyrolblöcken und Polybutadienblöcken und/oder Polyisoprenblöcken also zum Beispiel radiale Styrol-Butadien- (SB)ₙ und/oder lineare Styrol-Butadien-Styrol- (SBS) und/oder lineare Styrol-Isopren-Styrolblockcopolymere (SIS) Verwendung. Vorteile vorgenannter styrolblockcopolymerbasierender Haftklebemassen für den Einsatz in stripfähigen Selbstklebebändern sind zum Beispiel die mit ihnen erreichbaren sehr hohen Verklebungsfestigkeiten (bedingt u.a. durch die gleichzeitige Realisierung einer sehr hohen Kohäsion- und sehr hoher Klebkräfte), eine ausgeprägte Reduzierung der Haftklebrigkeit beim verstreckenden Ablösen (welches den Ablöseprozeß deutlich erleichtert oder gar erst ermöglicht) sowie eine sehr hohe Zugfestigkeit, welche insbesondere für einen reißer freien Ablöseprozeß wesentlich ist.

Die im Markt befindlichen Produkte, welche sämtlich Haftklebemassen auf Basis von Styrolblockcopolymeren nutzen, zeigen Schwächen bei der Verklebungsfestigkeit unter Einfluß von Luftfeuchtigkeit oder Wasser. Besonders ausgeprägt ist dieses Verhalten bei Verklebungen auf hydrophilen Untergründen wie Glas oder Keramik. Insbesondere bei Feuchtigkeitseinwirkung kurz nach der Verklebung von mittelschweren Gegenständen kommt es häufig zum Versagen der Haftklebestreifen. Die Halteleistung wird unter Feuchtigkeitseinfluß besonders bei denjenigen Haftklebestreifen verringert, die unpolare Klebharze wie Kohlenwasserstoffharze oder Polyterpenharze enthalten.

Bei Produkten, die einen Schaumstoffzwischenträger enthalten, auf dem auf beiden Seiten Klebemasse aufgebracht wurde, ist die Abnahme der Verklebungsfestigkeit unter Feuchtigkeitseinwirkung stärker ausgeprägt, als bei Klebestreifen, die nur aus einer Klebemasseschicht bestehen.

Ein Versagen der Verklebung tritt bei einer reinen Schälbelastung und besonders bei einer Kippscherbelastung (bei der ein Drehmoment wirksam ist, wie zum Beispiel bei der Verklebung eines Hakens mit einem bestimmten Hebel, an den etwas angehängt wird) deutlich stärker auf, als bei einer reinen Scherbelastung.

Aufgabe der vorliegenden Erfindung ist es, eine Haftklebemasse für einen ein- oder beidseitig haftklebrigen Klebfolienstreifen vorzulegen, welcher sich durch dehnendes Verstrecken im Wesentlichen parallel zur Verklebungsebene rückstands- und zerstörungsfrei auch von empfindlichen Untergründen wiederablösen läßt und welcher auch bei erhöhter Luftfeuchtigkeit gute Verklebungsfestigkeiten auch auf hydrophilen Untergründen wie Glas oder Keramik besitzt.

Die Aufgabe wird gelöst durch eine Haftklebemasse, wie sie im Hauptanspruch gezeigt ist. Vorteilhafte Weiterbildungen des Erfindungsgegenstands finden sich in den Unter ansprüchen wieder.

Demgemäß betrifft die Erfindung eine Haftklebemasse bestehend aus einer Mischung mit einem Blockcopolymer und einem Klebrigmacher, bei der in die Mischung wenigstens eine in H₂O quellbare Verbindung eingearbeitet ist.

Bei einer großen Anzahl von Häftklebemassen läßt die Verklebungsteistung unter dem Einfluß von hoher Luftfeuchtigkeit oder Wasser deutlich nach. Nicht nur, daß feuchte beziehungsweise nasse Klebestreifen deutlich schlechter oder gar nicht kleben, beziehungsweise man sie nur schwer auf nassen Untergründen verkleben kann, sondern bereits bestehende Verklebungen eines Klebebandes auf einem Untergrund können durch den Einfluß von Feuchtigkeit beziehungsweise Wasser in der Belastbarkeit verschlechtert werden, beziehungsweise ganz versagen. Dieses Phänomen ist besonders ausgeprägt bei hydrophilen Untergründen wie Glas oder Keramikprodukten wie Kacheln. Gerade Keramikkacheln findet man häufig in Badezimmer oder Küche, wo die Luftfeuchtigkeit kurzfristig sehr stark ansteigen kann. Hydrophile Untergründe besitzen die Eigenschaft, oftmals eine sehr dünne Schicht adsorbierten Wassers auf der Oberfläche gebunden zu haben, die erst bei sehr hohen Temperaturen entfernt werden kann. Durch diese dünne Wasserschicht kann Feuchtigkeit oder Wasser von Glas sehr leicht aufgenommen werden. Durch die molekulare Struktur des Glases ist dieses sogar in der Lage, Wasser auch im Glas selber aufzunehmen und nicht nur an der Oberfläche zu absorbieren. Ähnliches gilt auch für Keramikprodukte.

Wird nun ein Klebeband auf Keramikprodukten oder Glas verklebt, bleibt eine dünne Wasserschicht zwischen dem Klebeband und dem Glas bestehen. Diese Schicht ist so dünn, daß die Verklebungseigenschaften des Klebebandes nicht beeinflußt werden, der Verbund zwischen Klebeband und Glas kann sehr stark sein, ähnlich dem von Stahl und dem selben Klebeband.

Wirkt auf die Verklebung Feuchtigkeit in Form von hoher Luftfeuchtigkeit oder Wasser ein, kann die Wasserschicht zwischen Glas und Klebestreifen weiteres Wasser aufnehmen, wodurch die Schicht anwächst. Wasser kann auch durch das Glas an die Verklebungsfläche diffundieren. Die Verklebungsleistung nimmt dadurch in der Art ab, daß es zum Versagen der Verklebung führen kann.

Standardmäßig werden sehr weiche Klebemassen verwendet, die alle Poren des Glases verschließen können, so daß das Wasser nicht mehr in die Zwischenschicht hineindiffundieren kann. Dieser Weg wird zum Beispiel bei der Verklebung von Doppelglasscheiben beschritten, wo ein Isobutylkautschukkleber zum Einsatz kommt (laut Skeist, "Handbook of Adhesives", 2. Auflage, 1977).

Für stripfähige Systeme wie sie oben beschrieben werden, ist dieser Weg nicht möglich, wenn die Klebestreifen eine sehr hohe Verklebungsfestigkeit bieten sollen und auch durch Ziehen in der Verklebungsebene zerstörungsfrei wieder entfernbar sein sollen. Diese beiden Eigenschaften sind nur zu erreichen, wenn die Klebemasse eine hohe Kohäsion und hohe Reißfestigkeit besitzt, das heißt, die Klebemasse muß verhältnismäßig hart eingestellt werden. Dadurch können die beschriebenen Klebemassen nicht so exzellent auf das Glas oder die Keramik aufziehen, daß alle Poren des Glases verschlossen werden. Wasser kann daher in den Zwischenraum eindringen und zum Versagen der Verklebung führen. Besonders stark ausgeprägt ist dieser Effekt bei Verwendung von Klebestreifen mit einem Schaumstoffzwischenträger. Wasser oder Feuchtigkeit dringen hier sehr viel schneller ein als bei Klebestreifen, die nur aus dieser Klebemasse bestehen ohne Verwendung eines solchen Zwischenträgers.

Die in H₂O quellbare Verbindung verlangsamt ein Eindringen von Feuchtigkeit in die Grenzfläche zwischen Haftklebestreifen und Untergrund. Eine solche in H₂O quellbare Verbindung kann zum Beispiel ein Hydrogel sein. Hydrogele sind Wasser enthaltende Gele auf der Basis hydrophiler, aber wasserunlöslicher Polymere, die als dreidimensionale Netzwerke vorliegen. Die Polymere quellen in Wasser bis zu einem Gleichgewichtsvolumen unter Formerhaltung auf.

In einer bevorzugten Ausführungsform der Erfindung ist die in H₂O quellbare Verbindung ein Superabsorber. Superabsorber sind vemetzte oder teilweise vemetzte, hydrophile Polymere, die ein Vielfaches ihres Eigengewichtes an Flüssigkeit binden und dieses auch unter Einwirkung einer äußeren Kraft festhalten können. Durch eine Aufnahme von Wasser oder wäßriger Lösung bilden Superabsorber eine gelartige Konsistenz.

Der Superabsorber ist bevorzugt in einem Bereich zwischen 0,5 bis 20 Gew.-% und besonders bevorzugt zwischen 2 bis 8 Gew.-% bezogen auf die Haftktebemasse enthalten. Die Zugabe geringer Menge an Superabsorber hat den Vorteil, daß die mechanisehen und klebtechnischen Eigenschaften der Haftklebestreifen auf trockenen Untergründen nicht in der Art verändert werden, daß der eigentliche Einsatzzweck eingeschränkt wird.

Ein einziger Superabsorber oder ein Gemisch mehrerer Superabsorbern ist vorzugsweise in die Mischung eingearbeitet

Diese Superabsorber können vorzugsweise auf unterschiedlicher chemischer Basis eingesetzt werden, wie zum Beispiel Natriumsatze vemetzter Polyacrylsäure (zum Beispiel Favor® der Firma Stockhausen, Sanwet® der Firmen Hoechst und Sanyo, Drytech® der Firma Dow Chemicals, Aqualic der Firma BASF oder zum Beispiel Norsocryl der Firma Atochem), stärkemodifizierte vernetzte Polyacrylsäure (ebenfalls unter dem Namen Sanwet® von den Firmen Höchst und Sanyo angeboten), vernetzter Polyacrylamide, vernetzter Polysulfonsäure oder Carboxymethylcellulose. Die Superabsorbenr sind in der Lage, Wasser aufzunehmen, und quellen dabei auf. Durch ihre vemetzte Struktur lassen sie sich nicht in organischen Lösungsmitteln lösen und auch nicht in der Hitze aufschmelzen. Die Superabsorbenzien verändern deshalb bei der Einarbeitung in die Klebemasse, sei es durch Ausstreichen aus Lösungsmitteln oder durch Extrusion aus der Schmelze, nicht ihre chemische Struktur. Die Superabsorber verhalten sich in der Klebemasse wie polymere Füllstoffe. Daher haben die Superabsorber in geringem Anteil auch keinen Einfluß auf die mechanischen Eigenschaften von mit der Haftklebemasse gebildeten Haftklebestreifen. Die klebtechnischen Eigenschaften im Trockenen zeigen ebenfalls keinen Einfluß bei der Zugabe eines Superabsorbers.

Schon in einer Konzentration von 0,5 Gew.-% Superabsorbens bezogen auf die Gesamtklebemasse ist eine deutliche Verringerung bei der Feuchtigkeitsempfindlichkeit zu erzielen. Die Menge an Superabsorber, die für eine ausreichende Klebleistung nötig ist, hängt dabei von der Art des Superabsorbers, von der Härte der Klebemasse, von dem zu erreichenden Leistungsvermögen und auch vom Untergrund ab, um nur einige Einflüsse zu nennen. Bei Verwendung der Superabsorber der vorliegenden Erfindung ist ebenso die Teilchengröße auf das Produktdesign abzustimmen. Häufig können durch Vermahlungen deutlich kleinere Teilchengrößen als 1 mm erreicht werden, so daß der Einsatz in Haftklebestreifen, die üblicherweise eine Haftklebemassen-Schichtdicke von 1 mm besitzen, möglich ist

Eine Verwendung von Superabsorbern in Dichtungsmassen für Kabelverklebungen, die durch die Quellbarkeit der Superabsorber vor Feuchtigkeit schützen, ist in der DE 196 52 762 A1 beschrieben. Des weiteren beschreibt die DE 44 34 171 A1 die Verwendung von Superabsorbern bei Hygieneprodukten. Die Klebemasse bei diesen Anwendungen ist mit den Absorbem beschichtet Die Superabsorber in der vorliegenden Erfindung werden jedoch in die Klebemasse eingebracht und nicht auf diese beschichtet

Vorzugsweise enthält die Mischung wenigstens ein Additiv. Zur Stabilisierung der Haftklebemassen werden üblicherweise Antioxidantien zugesetzt. Additive können primäre oder sekundäre Antioxidantien sein, insbesondere kommen als primäre Antioxidantien sterisch gehinderte Phenole und als sekundäre Antioxidantien Phosphite oder Thiole zum Einsatz. Auch C-Radikalfänger können zugesetzt werden.

Als Additiv können jedoch auch Lichtschutzmittel verwendet werden, wie zum Beispiel UV-Absorber oder sterisch gehinderte Amine. Ebenfalls können ein Antiozonantien, Metalldesaktivatoren, Verarbeitungshilfsmittel oder endblockverstärkende Harze zugesetzt werden.

Weitere mögliche Additive können Plastifizierungsmittel sein. Als Plastifizierungsmittel können Flüssigharze, Weichmacheröle oder niedermolekulares flüssige Polymere, die ein niedermolekulares Polyisobutylen mit einer Molmasse < 1500 g/mol oder einen flüssigen EPDM (Ethylen/Propylen-Dien-Terpolymer)-Typ mit einem maximalen Mengenanteil von 20 Gew.-% besitzen, verwendet werden.

Füllstoffe, wie zum Beispiel Siliziumdioxid, Glas (gemahlen oder in Form von Kugeln), Aluminiumoxid, Zinkoxid, Calciumcarbonat, Titandioxid oder Ruß, um nur einige zu nennen, ebenso Farbpigmente und Farbstoffe sowie optische Aufheller können ebenfalls verwendet werden.

Ferner wird die Erfindung durch eine Verwendung der Haftklebemasse nach einem der vorhergehenden Ansprüche, zur Herstellung eines ein- und/oder beidseitigen haftklebrigen Klebefolienstreifens gelöst.

Als Haftklebemassen finden solche auf Basis von Blockcopolymeren enthaltenden Polymerblöcke gebildet von Vinylaromaten (A-Blöcke), wie zum Beispiel Styrol und solchen gebildet durch Polymerisation von 1,3-Dienen (B-Blöcke), wie zum Beispiel Butadien und Isopren Anwendung. Resultierende Blockcopolymere können gleiche oder unterschiedliche D-Blöcke enthalten, die teilweise, selektiv oder vollständig hydriert sein können. Blockcopolymere können lineare A-B-A Struktur aufweisen. Einsetzbar sind ebenfalls Blockcopolymere von radialer Gestalt sowie stemförmige und lineare Multiblockcopolymere. Als weitere Komponente können A-B Zweiblockcopolymere vorhanden sein. Blockcopolymere von Vinylaromaten und Isobutylen sind ebenfalls einsetzbar. Sämtliche der vorgenannten Polymere können allein oder im Gemisch miteinander genutzt werden.

Anstelle von Polystyrolblöcken können auch Polymerblöcke auf Basis anderer aromatenhaltiger Homo- und Copolymere (C-8 bis C-12 Aromaten) mit Glasübergangstemperaturen von > ca. 75 °C genutzt werden, wie zum Beispiel (-methylstyrolhaltige Aromatenblöcke. Gleichfalls sind Polymerblöcke auf Basis von (Meth)acrylathomo- und (Meth)acrylatcopolymeren mit Glasübergangstemperaturen von > 75 °C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, zum Beispiel Polystyrolblöcke, als auch Poly(meth)acrylatblöcke nutzen.

Anstelle von Styrol-Butadien Blockcopolymeren und Styrol-Isopren Blockcopolymeren und deren Hydrierungsprodukten, mithin Styrol-Ethylen/Butylen Blockcopolymere und Styrol-Ethylen/Propylen Blockcopolymere, können ebenfalls Blockcopolymere und deren Hydrierungsprodukte genutzt werden, welche weitere polydienhaltige Elastomerblöcke nutzen, wie zum Beispiel Copolymere mehrerer unterschiedlicher 1,3-Diene. Verwendbar sind des weiteren funktionalisierte Blockcopolymere, bei denen das Blockcopolymer ein maleinsäureanhydridmodifiziertes oder silanmodifiziertes Styrolblockcopolymer ist.

Typische Einsatzkonzentrationen für das Blockcopolymer liegen in einer Konzentration im Bereich zwischen 20 Gew.-% und 70 Gew.-%, insbesondere im Bereich zwischen 30 Gew.% und 60 Gew.% und im Bereich von 35 Gew.-% und 55 Gew.-% vor.

Als weitere Polymere können solche auf Basis reiner Kohlenwasserstoffe, zum Beispiel ungesättigte Polydiene, wie natürliche oder synthetisch erzeugtes Polyisopren oder Polybutadien, chemisch im Wesentlichen gesättigte Elastomere, wie zum Beispiel ein gesättigtes Ethylen-Propylen-Copolymer, ein (-Olefincopolymer, ein Polyisobutylen, ein Butylkautschuk, ein Ethylen-Propylenkautschuk, oder ein chemisch funktionalisierter Kohlenwasserstoff, wie ein halogenhaftiges, acrylathaltiges oder vinyletherhaltiges Polyolefin enthalten sein, die die vinylaromatenhaltigen Blockcopolymere bis zu ca. 100 phr (parts per hundred parts of resin) bezogen auf das Styrolblockcopolymer ersetzen können.

Die Haftklebemasse kann durch chemische, insbesondere strahlenchemische, zum Beispiel durch UV-Bestrahlung, (-Bestrahlung oder durch Bestrahlung mittels schneller Elektronen, vemetzt werden.

Haftklebemassen der vorliegenden Erfindung sind optional solche, deren Haftklebrigkeit erst durch thermische oder Lösemittelaktivierung erzeugt wird.

Geeignete Haftklebemassen sind neben den zuvor beschriebenen auf Basis vinylaromatenhaltiger Blockcopolymere all solche, welche über eine für den Ablöseprozeß ausreichende Reißfestigkeit, Kohäsion und Dehnung verfügen. Entsprechende Haftklebemassen können allein oder in Kombination mit solchen auf Basis vinylaromatenhaltiger Blockcopolymere eingesetzt werden.

Der Klebrigmacher ist ein Klebharz, das mit dem Elastomerblock der Styrolblockcopolymere verträglich ist. Geeignete Klebharze sind u.a. vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, Polyterpenharze auf Basis von (-Pinen und/oder (-Pinen und/oder (-Limonen, ein hydriertes Polymerisat reiner C-8 oder C-9 Aromaten. Vorgenannte Klebharze können sowohl allein als auch im Gemisch eingesetzt werden.

Erfindungsgemäße Haftklebemassen können sowohl für einschichtige durch dehnendes Verstrecken rückstands- und zerstörungsfrei wiederablösbare Selbstklebebänder (zum Beispiel entsprechend DE 33 31 016 C2, DE 42 22 849 C1 oder WO 98/03601 A1) als auch für mehrschichtige Selbstklebebänder ohne oder mit Schaumstoffzwischenträger (zum Beispiel entsprechend DE 197 08 366 A1, DE 198 20 858 A1, WO 92/11333 A1, DE 196 49 727 A1, DE 196 49 728 A1, DE 196 49 729 A1, DE 197 20 145 A1, US 5,516,581 A oder WO 95/06691 A1) verwendet werden. Im Falle der Verwendung in mehrschichtigen Selbstklebebändern entsprechend der DE 197 08 366 A1 bilden Haftklebemassen die Außenschichten der Klebestreifen. Klebestreifen können entsprechend DE 44 28 587 C2 und US 5,925,459 A ausgeformt beziehungsweise gemäß DE 44 31 914 C2 modifiziert sein. Die Haftklebemasse kann ebenfalls in Produkten entsprechend der DE 43 39 604 C2 genutzt werden.

Geeignete Zwischenträger beinhalten beispielsweise schaumstoffhalfige Trägermaterialien (Schaumstoffzwischenräger), insbesondere Homo- und Copolymere des Ethylens, insbesondere Polyethylene niederer und sehr niederer Dichte (LDPE, LLDPE, VLDPE), Ethylen-Vinylacetat Copolymere, sowie Gemische vorgenannter Polymere. Weitere Polymere können u. a. sein: Polyvinylacetate, Polypropylene, Polyurethane auf Basis aromatischer und aliphatischer Diisocyanate, Polystyrol, schlagzähmodiftzierte Polystyrole, PVC, Acrylatcopolymere. Schaumstoffe können vemetzt oder unvemetzt zum Einsatz kommen.

Die Dicken der eingesetzten Schaumstoffe liegen insbesondere zwischen 175 µm und 10 mm, bevorzugt zwischen 250 µm und 5 mm, besonders bevorzugt zwischen 350 µm und 3 mm. Raumdichten betragen 20 bis 400 kg/m³, bevorzugt 25 bis 250 kg/m³, besonders bevorzugt von 25 bis 150 kg/m³. Die Schaumstruktur kann geschlossenzellig, offenzellig oder gemischtzellig sein. Genutzt werden können verhautete oder nicht verhautete Schäume von integraler oder nicht integraler Struktur. Erfindungsgemäß einsetzbar sind ebenfalls Laminate mehrerer Schaumstoffe.

Zur Erzeugung einer ausreichenden Verankerung der eingesetzten Haftklebemassen auf den Schaumstoffen werden diese vorteilhaft bei der Herstellung und/oder vor ihrer Beschichtung mit Haftklebstoff einer Druckvorbehandlung unterzogen. Geeignete Vorbehandlungsverfahren sind u. a. die Fluorvorbehandlung, die Coronavorbehandlung, die Plasmavorbehandlung und die Flammvorbehandlung, letztere insbesondere mittels elektrisch polarisierter Flamme. Vorbehandlungsmethoden können alleine oder in Kombination angewandt werden. Bei verhauteten Schäumen und bei Integralschäumen kann zur weiteren Verbesserung der Klebmasseverankerung eine Primerung des Schaumes durchgeführt werden.

Offenzellige und gemischtzellige Schäume können einer Imprägnierung unterzogen sein. Zwischen Schaumstoff und Haftklebemassen kann optional eine Sperrschicht integriert sein, um die Wanderung migrationsfähiger Materialien zwischen Haftklebemassen und Schaumstoff zu reduzieren.

### Herstellung der Haftklebemassen

Die Herstellung und Verarbeitung der Haftklebemassen kann aus Lösung sowie aus der Schmelze erfolgen. Als Vorteilhaft hat sich hierbei die Fertigung der Klebemasse aus der Schmelze herausgestellt Für den letzteren Fall umfassen geeignete Herstellprozesse sowohl Batchverfahren als auch kontinuierliche Verfahren. Hierbei bietet sich die kontinuierliche Fertigung der Haftklebemasse mit Hilfe eines Extruders an.

### Konfektionierung

Typische Konfektionierformen der die erfindungsgemäßen Haftklebemasse nutzenden Selbstklebebänder sind Klebebandrollen sowie Klebestreifen, wie sie zum Beispiel in Form von Stanzlingen erhalten werden. Optional enthalten Stanzlinge einen nicht haftklebrigen Anfasserbereich, von welchem aus der Ablöseprozeß ausgeführt werden kann.

Einseitig haftklebrige Selbstklebebänder können hierbei zum Beispiel durch einseitige Inertisierung zuvor genannter beidseitig haftklebriger Selbstklebebänder beziehungsweise Selbstklebestreifen erhalten sein.

Im folgenden wird die Erfindung anhand von Beispielen näher erklärt, ohne damit die Erfindung in irgendeiner Form beschränken zu wollen.

Wie oben beschreiben werden Haftklebestreifen bestehend aus folgenden Bestandteilen hergestellt

### Beispiel 1:

| | | |
|---|---|---|
| 100 Teile | Kraton D 1165 | SIS mit 30 % Blockpolystyrolgehalt der Firma Kraton Polymers |
| 100 Teile | Wingtack 95 | KW-Harz mit einem Erweichungspunkt von 98 °C der Firma Goodyear |
| 0,5 Teile | Irganox 1010 | Alterungsschutzmittel der Firma Ciba-Geigy |
| 5 Teile | Favor T® | Superabsorbens auf Basis des Natriumsalzes vernetzter Polyacrylsäure der Firma Stockhausen |

### Vergleichsbeispiel C1:

| | | |
|---|---|---|
| 100 Teile | Kraton D 1165 | SIS mit 30 % Blockpolystyrolgehalt der Firma Kraton Polymers |
| 100 Teile | Wingtack 95 | KW-Harz mit einem Erweichungspunkt von 98 °C der Firma Goodyear |
| 0,5 Teile | Irganox 1010 | Alterungsschutzmittel der Firma Ciba-Geigy |

### Beispiel 2:

| | | |
|---|---|---|
| 100 Teile | Vector 8508 | SBS mit 30 % Blockpolystyrolgehalt der Firma Dexco |
| 100 Teile | Piccolyte A 115 | α-Pinen-Harz mit einem Erweichungspunkt von 115 °C der Firma Hercules |
| 0,5 Teile | Irganox 1010 | Alterungsschutzmittel der Firma Ciba-Geigy |
| 5 Teile | Sanfresh ST-100MPS | Superabsorbens auf Basis des Natriumsalzes vernetzter stärkemodifizierter Polyacrylsäure der Firma Sanyo |

### Vergleichsbeispiel C2:

| | | |
|---|---|---|
| 100 Teile | Vector 8508 | SBS mit 30 % Blockpolystyrolgehalt der Firma Dexco |
| 100 Teile | Piccolyte A 115 | α-Pinen-Harz mit einem Erweichungspunkt von 115 °C der Firma Hercules |
| 0,5 Teile | Irganox 1010 | Alterungsschutzmittel der Firma Ciba-Geigy |

### Beispiel 3:

| | | |
|---|---|---|
| 60 Teile | Kraton D 1165 | SIS mit 30 % Blockpolystyrolgehalt der Firma Kraton Polymers |
| 40 Teile | Vector 8508 | SBS mit 30 % Blockpolystyrolgehalt der Firma Dexco |
| 100 Teile | Foral 105® | Hydriertes Kolophonium-Harz mit einem Erweichungspunkt von 101 °C der Firma Hercules |
| 0,5 Teile | Irganox 1076 | Alterungsschutzmittel der Firma Ciba-Geigy |
| 5 Teile | Favor T® | Superabsorbens auf Basis des Natriumsalzes vernetzter Polyacrylsäure der Firma Stockhausen |

### Vergleichsbeispiel C3:

| | | |
|---|---|---|
| 60 Teile | Kraton D 1165 | SIS mit 30 % Blockpolystyrolgehalt der Firma Kraton Polymers |
| 40 Teile | Vector 8508 | SBS mit 30 % Blockpolystyrolgehaft der Firma Dexco |
| 100 Teile | Foral 105® | hydriertes Kolophonium-Harz mit einem Erweichungspunkt von 101 °C der Firma Hercules |
| 0,5 Teile | Irganox 1076 | Alterungsschutzmittel der Firma Ciba-Geigy |

### Beispiel 4:

| | | |
|---|---|---|
| 100 Teile | Kraton D 1165 | SIS mit 30 % Blockpolystyrolgehalt der Firma Kraton Polymers |
| 100 Teile | Piccolyte A 125 | α-Pinen-Harz mit einem Erweichungspunkt von 125 °C der Firma Hercules |
| 5 Teile | Wingtack 10 | flüssiges KW-Harz der Firma Goodyear |
| 0,5 Teile | Irganox 1076 | Alterungsschutzmittel der Firma Ciba-Geigy |
| 5 Teile | Favor T® | Superabsorbens auf Basis des Natriumsalzes vernetzter Polyacrylsäure der Firma Stockhausen |

### Vergleichsbeispiel C4:

| | | |
|---|---|---|
| 100 Teile | Kraton D 1165 | SIS mit 30 % Blockpolystyrolgehalt der Firma Kraton Polymers |
| 100 Teile | Piccolyte A 125 | α-Pinen-Harz mit einem Erweichungspunkt von 125 °C der Firma Hercules |
| 10 Teile | Wingtack 10 | flüssiges KW-Harz der Firma Goodyear |
| 0,5 Teile | Irganox 1076 | Alterungsschutzmittel der Firma Ciba-Geigy |

### Beispiel 5:

| | | |
|---|---|---|
| 100 Teile | Kraton D 1107 | SIS mit 15 % Blockpolystyrolgehalt der Firma Kraton Polymers |
| 100 Teile | Escorez 5600® | hydriertes KW-Harz mit einem Erweichungspunkt von 103 °C der Firma Exxon |
| 0,5 Teile | Irganox 1076 | Alterungsschutzmittel der Firma Ciba-Geigy |
| 5 Teile | Sanfresh ST-500MPS | Absorbens auf Basis des Natriumsalzes vemetzter Polyacrylsäure der Firma Sanyo |

### Vergleichsbeispiel C5:

| | | |
|---|---|---|
| 100 Teile | Kraton D 1107 | SIS mit 15 % Blockpolystyrolgehalt der Firma Kraton Polymers |
| 100 Teile | Escorez 5600® | hydriertes KW-Harz mit einem Erweichungspunkt von 103 °C der Firma Exxon |
| 0,5 Teile | Irganox 1076 | Alterungsschutzmittel der Firma Ciba-Geigy |

### Beispiel 6:

| | | |
|---|---|---|
| 50 Teile | Kraton D 1107 | SIS mit 15 % Blockpolystyrolgehalt der Firma Kraton Polymers |
| 50 Teile | Kraton D 1101 | SBS mit 30 % Blockpolystyrolgehalt der Firma Kraton Polymers |
| 100 Teile | Foral 105® | hydriertes Kolophonium-Harz mit einem Erweichungspunkt von 101 °C der Firma Hercules |
| 0,5 Teile | lrganox 1076 | Alterungsschutzmittel der Firma Ciba-Geigy |
| 5 Teile | Sanfresh ST-500MPS | Superabsorbens auf Basis des Natriumsalzes vernetzter Polyacrylsäure der Firma Sanyo |

### Vergleichsbeispiel C6:

| | | |
|---|---|---|
| 50 Teile | Kraton D 1107 | SIS mit 15 % Blockpolystyrolgehalt der Firma Kraton Polymers |
| 50 Teile | Kraton D 1101 | SBS mit 30 % Blockpolystyrolgehalt der Firma Kraton Polymers |
| 100 Teile | Foral 105® | hydriertes Kolophonium-Harz mit einem Erweichungspunkt von 101°C der Firma Hercules |
| 0,5 Teile | Irganox 1076 | Alterungsschutzmittel der Firma Ciba-Geigy |

### Beispiel 7:

| | | |
|---|---|---|
| 100 Teile | Kraton D 1165 | SIS mit 30 % Blockpolystyrolgehalt der Firma Kraton Polymers |
| 100 Teile | Piccolyte A 115 | α-Pinen-Harz mit einem Erweichungspunkt von 115 °C der Firma Hercules |
| 5 Teile | Ondina G 41® | Aliphatisches Weißöl der Firma Shell |
| 0,5 Teile | Irganox 1076 | Alterungsschutzmittel der Firma Ciba-Geigy |
| 5 Teile | Favor T® | Superabsorbens auf Basis des Natriumsalzes vernetzter Polyacrylsäure der Firma Stockhausen |

### Beispiel 8:

| | | |
|---|---|---|
| 100 Teile | Kraton D 1165 | SIS mit 30 % Blockpolystyrolgehalt der Firma Kraton Polymers |
| 100 Teile | Piccolyte A 115 | α-Pinen-Harz mit einem Erweichungspunkt von 115°C der Firma Hercules |
| 10 Teile | Ondina G 41® | Aliphatisches Weißöl der Firma Shell |
| 0,5 Teile | Irganox 1076 | Alterungsschutzmittel der Firma Ciba-Geigy |
| 5 Teile | Favor T® | Superabsorbens auf Basis des Natriumsalzes vernetzter Polyacrylsäure der Firma Stockhausen |

### Beispiel 9:

| | | |
|---|---|---|
| 100 Teile | Kraton D 1165 | SIS mit 30 % Blockpolystyrolgehalt der Firma Kraton Polymers |
| 100 Teile | Piccolyte A 115 | α-Pinen-Harz mit einem Erweichungspunkt von 115 °C der Firma Hercules |
| 20 Teile | Ondina G 41® | Aliphatisches Weißöl der Firma Shell |
| 0,5 Teile | Irganox 1076 | Alterungsschutzmittel der Firma Ciba-Geigy |
| 5 Teile | Favor T® | Superabsorbens auf Basis des Natriumsalzes vernetzter Polyacrylsäure der Firma Stockhausen |

### Vergleichsbeispiel C7:

| | | |
|---|---|---|
| 100 Teile | Kraton D 1165 | SIS mit 30 % Blockpolystyrolgehalt der Firma Kraton Polymers |
| 100 Teile | Piccolyte A 115 | α-Pinen-Harz mit einem Erweichungspunkt von 115 °C der Firma Hercules |
| 5 Teile | Ondina G 41® | Aliphatisches Weißöl der Firma Shell |
| 0,5 Teile | Irganox 1076 | Alterungsschutzmittel der Firma Ciba-Geigy |

**Tabelle 1: Mechanische und klebtechnische Daten**

| Beispiel Nr. | Zugfestigkeit in MPa | Stripspannung In MPa | Schälgeschwindigkeit In mm/24h | Kippscherstandzeit in Tagen |
|---|---|---|---|---|
| 1 | 10,7 | 1,9 | 26 | 19 |
| C1 | 10,4 | 1,7 | 23 | 18 |
| 2 | 13,0 | 2,2 | 12 | > 60 |
| C2 | 13,3 | 2,1 | 11 | > 60 |
| 3 | 12,5 | 1,8 | 16 | 28 |
| C3 | 12,1 | 1,8 | 18 | 31 |
| 4 | 11,6 | 2,2 | 16 | > 60 |
| C4 | 11,8 | 2,0 | 14 | > 60 |
| 5 | 9,7 | 1,3 | 7 | 14 |
| C5 | 9,5 | 1,2 | 9 | 18 |
| 6 | 10,9 | 1,6 | 6 | 21 |
| C6 | 11,2 | 1,5 | 5 | 18 |
| 7 | 12,2 | 1,5 | 12 | 42 |
| 8 | 12,4 | 1,7 | 16 | 45 |
| 9 | 11,6 | 1,9 | 20 | 34 |
| C7 | 12,4 | 1,4 | 15 | 51 |

Die Tabelle 1 zeigt mechanische und klebtechnische Daten für die vorbeschriebenen Beispiele. Wie aus den gemessenen Werten für die Vergleichsbeispiele zu erkennen ist, hat der Superabsorber keinen Einfluß auf die mechanischen Eigenschaften und die klebtechnischen Eigenschaften bei Verklebungen im Trockenen. Erst bei Anteilen von über 10 phr bezogen auf das Blockcopolymer lassen sich erhöhte Stripkräfte erkennen, die aber nicht als nachteilig zu werten sind. 20 Teile Superabsorbens bezogen auf das Blockcopolymer haben geringe Einflüsse auf die Verktebungsleistung, da wahrscheinlich viel Füllstoff an der Oberfläche liegt.

**Tabelle 2: Verklebungsleistungen unter Einwirkung von Feuchtigkeit**

| Beispiel Nr. | Schälgeschwindigkeit in mm/24h unter Feuchtigkeit | Kippscherstandzeit in Tagen unter Feuchtigkeit |
|---|---|---|
| 1 | 25 | 17 |
| C1 | > 40 | < 1 |
| 2 | 14 | > 30 |
| C2 | > 40 | < 1 |
| 3 | 9 | > 30 |
| C3 | 32 | 5 |
| 4 | 27 | > 30 |
| C4 | > 40 | < 1 |
| 5 | 20 | 9 |
| C5 | > 40 | < 1 |
| 6 | 5 | 14 |
| C6 | 21 | 3 |
| 7 | 18 | > 30 |
| 8 | 12 | > 30 |
| 9 | 23 | > 30 |
| C7 | > 40 | < 1 |

Die Tabelle 2 zeigt Verklebungsleistungen unter Einwirkung von Feuchtigkeit. Durch die Zugabe eines Superabsorbers sind die Verklebungsleistungen unter Feuchtigkeitseinfluß auf hydrophilen Untergründen deutlich verbessert worden. Bereits geringe Mengen sind ausreichend, um den gewünschten Effekt zu erzielen.

### Die mechanischen und klebtechnischen Daten wurden wie folgt ermittelt:

### Zugfähigkeit beziehungsweise max. Dehnung

Die Zugfähigkeit beziehungsweise max. Dehnung wurde in Anlehnung an DIN .53504 unter Verwendung von Schulterstäben der Größe S3 bei einer Separationsgeschwindigkeit von 300 mm pro Minute gemessen.

### Ablösekraft

Die Ablösekraft (Stripkraft beziehungsweise Stripspannung) wurde mit Hilfe einer Klebstoff-Folie mit den Abmessungen 50 mm Länge x 20 mm Breite mit einem am oberen Ende nicht haftklebrigem Anfasserbereich ermittelt. Die Klebstoff-Folie wurde zwischen zwei deckungsgleich zueinander angeordneten Stahlplatten mit einer Abmessung von 50 mm x 30 mm mit einem Anpreßdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden für eine Dauer von 24 Stunden bei + 40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm²), gemessen in dem Bereich, in welchem der Klebestreifen auf einer Verklebungslänge zwischen 10 mm und 40 mm von den Stahluntergründen abgelöst ist.

### Schälfestigkeit

Zur Ermittlung der Schälfestigkeit werden die zu untersuchenden Haftklebestreifenmuster einseitig vollflächig mit einer 23 µm starken PET-Folie (beispielsweise Hostaphan RN 25; Mitsubishi Chemicals) luftblasenfrei einkaschiert. Danach wird die zweite Klebfolienstreifenseite an einem Ende mit einem ca. 6 mm langen Folienstreifen (ebenfalls Hostaphan RN 25) abgedeckt, so daß an diesem Ende ein beidseitig nicht haftklebriger Anfasserbereich entsteht. Hiernach wird der zu prüfende Klebfolienstreifen vorderseitig mit leichtem Fingerandruck auf den Prüfuntergrund (gestrichene Rauhfasertapete: Tapete = Erfurt Köming 52, Farbe = Herbol Zenit LG, Tapete verklebt auf Preßspanplatte) aufgeklebt. Die Haftklebefolienmuster werden anschließend 10 Sekunden lang bei einem Anpreßdruck von 90 N pro 10 cm² Haftklebefläche angedrückt. Danach werden die Haftklebemuster 15 Minuten bei 40 °C konditioniert. Die Prüfplatten werden anschließend horizontal fixiert, so daß der Klebestreifen nach unten gerichtet ist. An den nicht klebenden Anfasser wird mit Hilfe einer Klemme (20 g) ein Gewicht von 50 g befestigt, so daß die entstehende Schälbelastung (ca. 0,7 N pro 20 mm Klebstreifenbreite) orthogonal zur Verklebungsebene wirkt. Nach einer Testphase von 15 Minuten und wiederholt nach weiteren 24 Stunden wird diejenige Strecke markiert, die der Klebestreifen vom Verklebungsuntergrund seit Versuchsbeginn abgeschält ist. Der Abstand zwischen den beiden Markierungen wird als Schälweg (Einheit: mm pro 24 Stunden) angegeben.

### Kippscherfestigkeit

Zur Bestimmung der Kippscherfestigkeit wird die zu prüfende Klebstoff-Folie der Abmessung 20 mm x 50 mm, die an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm (Hostaphan RN 25)) mittig auf eine hochglanzpolierte quadratische Stahlplatte der Abmessung 40 mm Länge x 40 mm Breite x 3 mm Dicke verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund (Stahl) mit einer Andruckzeit von 5 Sekunden verklebt und 5 Minuten im unbelasteten Zustand belassen. Nach Beaufschlagung der gewählten Kippscherbelastung durch Anhängen eines Gewichtes (20 N bei 50 mm Hebelarm) wird die Zeit bis zum Versagen der Verklebung (Kippscherstandzeit) ermittelt. Das Testklima ist dabei 23°C bei einer relativen Luftfeuchtigkeit von 50 %.

### Kippscherfestigkeit (Kippscherstandzeiten) unter Feuchtigkeitseinfluß

Die Messung der Kippschertestigkeit unter dem Einfluß von Feuchtigkeit erfolgt wie oben beschrieben mit der Ausnahme, daß die Messung unter einer relativen Luftfeuchtigkeit von 85 % unter einer Temperatur von 35 °C durchgeführt wird. Als Testgrund werden Fensterglasplatten der Stärke 4 mm verwendet, die vorher mit Ethylacetat und Ethanol gereinigt wurden. Die Verklebung und Probenpräparation ist identisch mit der Bestimmung der Kippscherfestigkeit bei Normalklima. Als Belastung wird ein Gewicht von 10 N bei einem Hebel von 50 mm verwendet

### Schälfestigkeit unter Feuchtigkeitseinfluß

Die Messung der Schälfestigkeit unter dem Einfluß von Feuchtigkeit erfolgt wie oben unter Schälfestigkeit beschrieben mit der Ausnahme, daß die Messung unter einer relativen Luftfeuchtigkeit von 85 % bei einer Temperatur von 35 °C durchgeführt wird. Als Testgrund werden Fensterglasplatten der Stärke 4 mm verwendet, die vorher mit Ethylacetat und Ethanol gereinigt wurden. Die Verklebung und Probenpräparation ist identisch mit der Bestimmung der Schälfestigkeit im Normalklima. Die Belastung beträgt 70 g. Die Bestimmung des Schälweges erfolgt in mm/24h.

### Herstellung der Prüfkörper

### Herstellung der Haftklebestreifen:

Haftklebemassen werden in einem heizbaren Kneter mit Sigma-Schaufel (Werner & Pfleiderer LUK 1,0 K3 ausgerüstet mit einem Thermostaten LTH 303 der Firma mgw LAUDA) bei einer Temperatur von ca. 160 bis 180° C und unter Inertisierung mit CO₂ als Schutzgas zu einer homogenen Mischung verarbeitet. Nach dem Erkalten werden durch ca. zehnminütiges Verpressen der Klebemasse bei 120 bis 140° C (temperierbare Presse: Typ KHL 50 der Firma Bucher-Guyer) einschichtige Klebstoff-Folienstücke der Dicke 700 µm ( 50 µm (Mittelwert ( 2-fache Standardabweichung) hergestellt. Einschichtige Haftklebestreifen der gewünschten Abmessungen werden durch Ausstanzen erhalten. Im Falle der Herstellung mehrschichtiger Haftklebestreifen werden die entsprechenden Schichten zuvor durch Kaschierung (ggf. durch Heißkaschierung) verbunden und danach die Klebestreifen durch Ausstanzen vereinzelt.

## Patentansprüche

1. Verwendung einer Haftktebemasse zur Herstellung eines ein- und/oder beidseitigen haftklebrigen Klebefolienstreifens, welcher sich durch dehnendes Verstrecken in der Verklebungsebene rückstands- und zerstörungsfrei wieder ablösen lassen, bestehend aus einer Mischung mit einem Blockcopolymer und einem Klebrigmacher **dadurch gekennzeichnet, dass** in die Mischung wenigstens eine in H₂O quellbare Verbindung eingearbeitet ist.

2. Verwendung einer Haftklebemasse nach Anspruch 1, **dadurch gekennzeichnet, dass** die in H₂O quellbare Verbindung ein Superabsorber ist.

3. Verwendung einer Haftklebemasse nach einem der Ansprüche 1 oder 2, **dadurch gekennzeichnet, dass** die quellbare Verbindung in einem Bereich zwischen 0,5 bis 20 Gew.-% bezogen auf die Haftklebemasse enthalten ist.

4. Verwendung einer Haftklebemasse nach einem der Ansprüche 1 bis 3, **dadurch gekennzeichnet, dass** die quellbare Verbindung in einem Bereich zwischen 2 bis 8 Gew.-% bezogen auf die Haftklebemasse enthalten ist.

5. Verwendung einer Haftklebemasse nach einem der Ansprüche 1 bis 4, **dadurch gekennzeichnet, dass** eine einzige quellbare Verbindung oder ein Gemisch mehrerer quellbarer Verbindungen in die Mischung eingearbeitet ist.

6. Verwendung einer Haftklebemasse nach einem der Ansprüche 2 oder 5, **dadurch gekennzeichnet, dass** der Superabsorber ein Natriumsalz einer vemetzten Polyacrylsäure, eine stärkemodifizierte vemetzte Polyacrylsäure, ein vemetztes Polyacrylamid, eine vemetzte Polysulfonsäure oder Carboxymethylcellulose ist

7. Verwendung einer Haftklebemasse nach einem der Ansprüche 1 bis 6. **dadurch gekennzeichnet, dass** die Mischung wenigstens ein Additiv enthält

## Claims

1. Use of a pressure sensitive adhesive for producing a single-sided and/or double-sided adhesive sheet strip which can be redetached without residue or destruction by extensive stretching in the plane of the bond, composed of a mixture comprising a block copolymer and a tackifier, **characterized in that** at least one compound swellable in H₂O has been incorporated into the mixture.

2. Use of a pressure sensitive adhesive according to Claim 1, **characterized in that** the compound swellable in H₂O is a superabsorbent.

3. Use of a pressure sensitive adhesive according to one of Claims 1 and 2, **characterized in that** the swellable compound is present in a range between 0.5 to 20% by weight, based on the pressure sensitive adhesive.

4. Use of a pressure sensitive adhesive according to any one of Claims 1 to 3, **characterized in that** the swellable compound is present in a range between 2 to 8% by weight, based on the adhesive.

5. Use of a pressure sensitive adhesive according to any one of Claims 1 to 4, **characterized in that** a single swellable compound or a mixture of two or more swellable compounds has been incorporated into the mixture.

6. Use of a pressure sensitive adhesive according to either of Claims 2 and 5, **characterized in that** the superabsorbent is a sodium salt of a crosslinked polyacrylic acid, a starch-modified crosslinked polyacrylic acid, a crosslinked polyacrylamide, a crosslinked polysulphonic acid or carboxymethylcellulose.

7. Use of a pressure sensitive adhesive according to any one of Claims 1 to 6, **characterized in that** the mixture comprises at least one additive.

## Revendications

1. Utilisation d'une masse autoadhésive pour la préparation de bandes de feuille de collage autoadhésives sur une et/ou sur les deux faces, qui peuvent être à nouveau détachées par étirement d'allongement dans le plan de collage sans laisser de résidus et sans endommagement, consistant en un mélange d'un copolymère bloc et d'un agent donnant du collant, **caractérisée en ce qu'**au moins un composé gonflable dans H₂O est incorporé au mélange.

2. Utilisation d'une masse autoadhésive selon la revendication 1, **caractérisée en ce que** le composé gonflable dans H₂O est un superbasorbant.

3. Utilisation d'une masse autoadhésive selon la revendication 1 ou 2, **caractérisée en ce que** le composé gonflable est contenu en une quantité de l'ordre de 0,5 à 20% en poids, par rapport à la masse autoadhésive.

4. Utilisation d'une masse autoadhésive selon l'une quelconque des revendications 1 à 3, **caractérisée en ce que** le composé gonflable est contenu en une quantité de l'ordre de 2 à 8% en poids, par rapport à la masse autoadhésive.

5. Utilisation d'une masse autoadhésive selon l'une quelconque des revendications 1 à 4, **caractérisée en ce qu'**un seul composant gonflable ou un mélange de plusieurs composants gonflables est incorporé au mélange.

6. Utilisation d'une masse autoadhésive selon la revendication 2 ou 5, **caractérisée en ce que** le superabsorbant est un sel de sodium d'un poly(acide acrylique) réticulé, un poly(acide acrylique) réticulé modifié par de l'amidon, un polyacrylamide réticulé, un poly(acide sulfonique) réticulé ou de la carboxyméthylcellulose.

7. Utilisation d'une masse autoadhésive selon l'une quelconque des revendications 1 à 6, **caractérisée en ce que** le mélange contient au moins un additif.
